# DEMANDE DE BREVET EUROPEEN

(11) **EP 0 840 014 A1**
(43) Date de publication de la demande: **06.05.1998**
(21) Numéro de dépôt: 97402131.3
(22) Date de dépôt: 15.09.1997
(51) Int. Cl.: F04D 15/02, F04B 49/06, F04B 49/025, H02J 9/06, F04C 15/04

(54) **Installation de pompage à circuit permettant de ménager une source d'énergie de secours**

(30) Priorité: 31.10.1996 FR 9613336
(71) Demandeur: KSB S.A., 92230 Gennevilliers (FR)
(72) Inventeur: Berthon, Jacques, Niherne, 36250 Saint-Maur (FR)
(74) Mandataire: Eidelsberg, Victor Albert

(57) **Abrégé**

Dans cette installation de pompage, on ménage la batterie (6) d'accumulateur de secours en injectant par un dispositif d'injection (11) un courant continu en sorte que la fermeture de l'interrupteur (4) du groupe motopompe (1) permette d'activer le convertisseur (14).

## Description

Les pompes utilisées en vide cave dans les pavillons d'habitation sont sollicitées en général lors des pluies importantes.

Elles doivent alors évacuer rapidement une entrée d'eau ponctuelle due aux infiltrations. La capacité de débit de ces pompes est très supérieure à celle engendrée par l'infiltration, leur temps de fonctionnement, bien que primordial pour sauvegarder le local, est de durée très courte.

Dans des régions particulièrement exposées, les précipitations importantes sont dues à des orages très violents qui se traduisent par de fortes pluies accompagnées de coupures plus ou moins longues du secteur d'alimentation.

Durant ces absences de secteur, le vide cave ne peut remplir sa fonction, ce qui se traduit par des dégâts très importants.

Diverses solutions pour pallier les défaillances du réseau électrique ont été proposées. Les principales sont les suivantes :
- Pompe de vide cave avec moteur hydraulique (nécessite une pression du réseau d'eau pour entraîner le moteur).
- Pompe de vide cave alimentée par groupe électrogène (nécessite en général la présence de l'utilisateur).
- Pompe de vide cave à courant continu sur batteries d'accumulateurs (les pompes ont une fiabilité très restreinte du fait du principe du moteur).
- Pompe de vide cave standard associé à un convertisseur de fréquence et des batteries d'accumulateurs commandés par la présence de secteur.

Dans ce cas, des batteries sont maintenues en charge et, lorsque le secteur devient défaillant, le convertisseur prend en charge la foumiture d'électricité pour l'ensemble de l'installation. A chaque coupure de courant et quel que soit le besoin d'énergie, le convertisseur est activé et consomme l'énergie stockée.

La dernière solution décrite utilise un convertisseur statique en relève permanente des défaillances du secteur.

Ce système est aujourd'hui largement utilisé en protection informatique, mais il présente l'inconvénient d'être coûteux et surtout nécessite une grande réserve d'énergie électrique.

La présente invention vise une installation du type décrit en dernier lieu, qui permet de ménager la source de courant continu de secours.

L'invention a donc pour objet une installation de pompage comprenant
- un groupe motopompe alimenté par une source de courant alternatif par l'intermédiaire d'un circuit de commande ayant un interrupteur ;
- un discriminateur qui, lorsqu'il détecte une défaillance de la source de courant alternatif, connecte le circuit de commande à une source de courant continu en interposant entre cette source et l'interrupteur un convertisseur de courant continu en courant alternatif ;
- des moyens destinés à détecter si le groupe motopompe doit être mis en marche et dans l'affirmative à fermer l'interrupteur,

L'installation est caractérisée par des moyens d'injection d'un courant continu dans le circuit de commande jusqu'à l'interrupteur, alors que le convertisseur n'est pas actif de manière à mettre sous tension, si du liquide est présent au niveau de l'interrupteur, un circuit d'avertissement que le groupe motopompe doit être mis en marche et des moyens pour, si le circuit d'avertissement est mis sous tension, activer le convertisseur.

On n'alimente ainsi la pompe par la source de courant continu que si elle en a besoin en utilisant pour déterminer ce besoin l'interrupteur même du circuit habituel de commande par l'injection d'un petit courant continu dont le retour, lorsque l'interrupteur est fermé, avertit que la pompe a besoin de fonctionner. Ce n'est qu'alors que le convertisseur est mis en marche et que de l'énergie est prélevée de la source de courant continu.

De préférence, il est prévu des moyens d'indication qui indiquent, lorsque l'interrupteur s'ouvre à nouveau après que le convertisseur a été activé, que le groupe motopompe n'a plus à fonctionner et des moyens d'arrêt du convertisseur commandés par les moyens d'indication avec remise en fonctionnement des moyens d'injection. On remet ainsi, lorsque la pompe n'a plus à fonctionner mais alors que la source de courant alternatif est toujours défaillante, l'installation en la position qu'elle a juste après que la source de courant alternatif est défaillante.

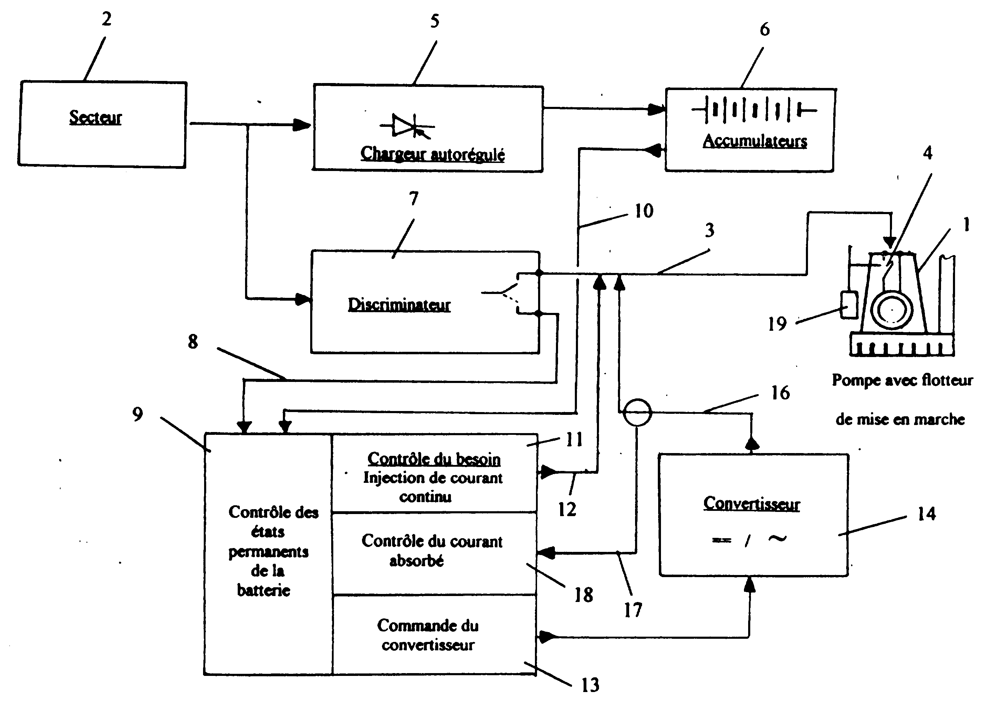

La figure unique du dessin annexé illustre l'invention.

L'installation comprend un groupe motopompe 1 alimenté par une source 2 de courant altematif, en l'occurrence par le secteur, par l'intermédiaire d'un circuit 3 de commande ayant un interrupteur 4 commandé par un flotteur 19 qui détecte le niveau de l'eau dans la cave. Le secteur alimente en outre un chargeur 5 d'une batterie 6 d'accumulateur servant de source de courant continu de secours. Dans le circuit 3 est monté un discriminateur 7 qui, lorsqu'il détecte une défaillance de la source 2 de courant alternatif, connecte le circuit de commande à une source 6 de courant continu par l'intermédiaire d'une ligne 8 d'un contrôleur 9 et d'une ligne 10. Le contrôleur 9 est capable, par un dispositif d'injection 11 de courant continu, d'injecter par une ligne 12 un courant continu dans le circuit de commande entre le discriminateur 7 et l'interrupteur 4. Le contrôleur comporte également un dispositif 13 de commande d'un convertisseur 14 de courant continu en courant alternatif, dont la sortie est reliée par une ligne 16 en un point du circuit de commande intermédiaire entre le discriminateur 16 et l'interrupteur 4.

Il est en outre prévu en dérivation de la ligne 16 une ligne 17 menant à un dispositif de contrôle 18 du courant absorbé faisant partie du contrôleur 9.

L'installation fonctionne de la manière suivante. Normalement, la pompe 1 est alimentée par le secteur 2 par l'intermédiaire du circuit 3 de commande, du discriminateur 7 et de l'interrupteur 4. Lorsque le secteur 2 est défaillant, le discriminateur 7 bascule et relie le contrôleur 9 par l'intermédiaire de la ligne 8 à la batterie d'accumulateurs 6 par l'intermédiaire de la ligne 10. Le dispositif 11 d'injection injecte par la ligne 12 un petit courant continu qui revient si l'interrupteur 4 est fermé, c'est-à-dire si la pompe a besoin d'être mise en marche, l'interrupteur 4 étant commandé par le flotteur 19. Si la pompe n'a pas besoin d'être mise en marche, la source 6 de courant continu ne débite pas. Si l'interrupteur 4 est fermé, il revient par la ligne 12 un courant continu au dispositif 11 d'injection lequel commande le dispositif 13 de commande du convertisseur et l'active. Du courant continu passe alors de la batterie d'accumulateurs 6 au groupe motopompe 1 par la ligne 10, le contrôleur 9, le convertisseur 14 et la ligne 16. Dès que l'interrupteur 4 s'ouvre, parce que le niveau de l'eau dans la cave s'est abaissé et parce que le groupe turbopompe 1 n'a plus besoin de fonctionner, le dispositif 18 de contrôle du courant absorbé en est averti par la ligne 17. Il donne l'ordre au dispositif de commande 13 du convertisseur de rendre celui-ci inactif et au dispositif 11 d'injection d'injecter à nouveau un petit courant continu.

## Revendications

1. Installation de pompage comprenant
- un groupe motopompe (1) alimenté par une source (2) de courant alternatif par l'intermédiaire d'un circuit (3) de commande ayant un interrupteur (4) ;
- un discriminateur (7) qui, lorsqu'il détecte une défaillance de la source (2) de courant alternatif, connecte le circuit (3) de commande à une source (6) de courant continu en interposant entre cette source (6) et l'interrupteur (4) un convertisseur (10) de courant continu en courant alternatif ;
- des moyens (19) destinés à détecter si le groupe motopompe doit être mis en marche et dans l'affirmative à fermer l'interrupteur (4),
caractérisée par des moyens d'injection (11) d'un courant continu dans le circuit (3) de commande jusqu'à l'interrupteur (4), alors que le convertisseur n'est pas actif de manière à mettre sous tension, si du liquide est présent au niveau de l'interrupteur (4), un circuit (13) d'avertissement que le groupe motopompe (1) doit être mis en marche et des moyens pour, si le circuit d'avertissement (12) est mis sous tension, activer le convertisseur (14).

2. Installation suivant la revendication 1, caractérisée par des moyens (17) d'indication, lorsque l'interrupteur (4) s'ouvre à nouveau, après que le convertisseur (14) a été activé, que le groupe motopompe (1) n'a plus à fonctionner et des moyens d'arrêt (18) du convertisseur commandés par les moyens (17) d'indication avec remise en fonctionnement des moyens (11) d'injection.
